# EUROPEAN PATENT APPLICATION

(11) **EP 4 471 473 A1**
(43) Date of publication of application: **04.12.2024**
(21) Application number: 23769693.5
(22) Date of filing: 13.03.2023
(51) Int. Cl.: G02B 6/13, G02B 6/122, G02B 6/12

(54) **OPTICAL CHIP AND PREPARATION METHOD THEREFOR**

(30) Priority: 16.03.2022 CN 202210260411
(71) Applicant: Huawei Technologies Co., Ltd., Shenzhen, Guangdong 518129 (CN)
(72) Inventor: NIU, Xinxiang, Shenzhen, Guangdong 518129 (CN); ZHANG, Xiang, Shenzhen, Guangdong 518129 (CN); DONG, Xiaowen, Shenzhen, Guangdong 518129 (CN)
(74) Representative: Pfenning, Meinig & Partner mbB
(86) International application number: PCT/CN2023/080971
(87) International publication number: WO 2023/174190

(57) **Abstract**

This application provides an optical chip and a preparation method therefor. The optical chip includes an optical substrate, and a first functional layer, a first space layer, and a second functional layer that are sequentially disposed on the optical substrate. A second optical structure is formed at the second functional layer. The second optical structure includes a second inter-layer coupling structure and a second intra-layer transmission structure, and the second intra-layer transmission structure is located in a first area of the second functional layer. A first optical structure located in a second area is formed at the first functional layer. The first optical structure includes a first inter-layer coupling structure and a first intra-layer transmission structure, and a projection of the second area in a normal direction of a plane of the optical substrate does not overlap with a projection of the first area in the normal direction of the plane of the optical substrate. The second inter-layer coupling structure is located in a third area of the second functional layer, the first inter-layer coupling structure is located in a fourth area of the first functional layer, and a projection of the third area in the normal direction of the plane of the optical substrate partially or completely overlaps with a projection of the fourth area in the normal direction of the plane of the optical substrate. The optical structures at the functional layers of the optical chip do not need to be optically aligned in a mechanical manner.

## Description

This application claims priority to Chinese Patent Application No. 202210260411.9, filed with the China National Intellectual Property Administration on March 16, 2022 and entitled "OPTICAL CHIP AND PREPARATION METHOD THEREFOR", which is incorporated herein by reference in its entirety.

### TECHNICAL FIELD

This application relates to the field of semiconductors and the field of opto-electronic integration, and more specifically, to an optical chip and a preparation method therefor.

### BACKGROUND

In recent years, to adapt to explosive growth of information transmission and computing requirements in application scenarios such as artificial intelligence, cloud, and high-performance computing, an all-optical information processing system gradually enters an integrated chip-based era. Compared with a conventional discrete optical information processing system constructed based on a manner in which different functional devices are connected by using an optical fiber, an integrated chip-based optical system (namely, an optical chip) is less susceptible to changes in temperature, magnetic field, noise, and the like, and has stronger anti-interference performance. In addition, due to integration for an overall size of the system, a bandwidth density of the optical information processing system can be increased by several orders of magnitude, and a power consumption density can be greatly reduced, to enable the optical information processing system to meet actual requirements for large-scale information processing.

The optical chip may include a plurality of modules having different functions, such as optical signal generation, modulation, passive transmission, and detection, to transmit and process an optical signal on a single chip. Optical materials for constructing these modules have different characteristics. For example, for an optical signal generation module and a detection module in the chip, a material having a high gain and a high absorption coefficient needs to be used; and for a transmission module, a material having optical transparency (that is, a low gain and a low absorption coefficient) needs to be used, to reduce an overall signal transmission loss of the chip. Therefore, it is difficult to construct the optical chip based on a single material. Generally, a plurality of materials are selected to construct different functional modules, and heterogeneous integration is performed.

In a process of constructing a heterogeneously integrated optical chip, high-precision mechanical alignment needs to be performed on projections, along an in-plane direction or a normal direction of the chip, of different functional modules constructed by using different materials. Therefore, preparation efficiency of such a heterogeneously integrated optical chip is limited.

### SUMMARY

This application provides an optical chip and a preparation method therefor. Optical structures at functional layers of the optical chip do not need to be optically aligned in a mechanical manner, so that preparation efficiency of a heterogeneously integrated optical chip can be improved.

According to a first aspect, an optical chip is provided. The optical chip includes an optical substrate, a first functional layer disposed on the optical substrate, a first space layer disposed on the first functional layer, and a second functional layer disposed on the first space layer. A second optical structure is formed at the second functional layer, the second optical structure includes a second inter-layer coupling structure and a second intra-layer transmission structure, and the second intra-layer transmission structure is located in a first area of the second functional layer. A first optical structure is formed at the first functional layer, the first optical structure includes a first inter-layer coupling structure and a first intra-layer transmission structure, the first optical structure is located in a second area of the first functional layer, and a projection of the second area in a normal direction of a plane of the optical substrate does not overlap with a projection of the first area in the normal direction of the plane of the optical substrate. The inter-layer coupling structure is configured for signal exchange between the first functional layer and the second functional layer. The intra-layer transmission structure is configured to control signal transmission within the functional layer. The second inter-layer coupling structure is located in a third area of the second functional layer, the first inter-layer coupling structure is located in a fourth area of the first functional layer, and a projection of the third area in the normal direction of the plane of the optical substrate partially or completely overlaps with a projection of the fourth area in the normal direction of the plane of the optical substrate.

According to the optical chip provided in this embodiment of this application, the second optical structure located in the first area is formed at the second functional layer, and the second optical structure includes the second inter-layer coupling structure and the second intra-layer transmission structure. The first optical structure located in the second area is formed at the first functional layer, the first optical structure includes the first inter-layer coupling structure and the first intra-layer transmission structure, and the projection of the second area in the normal direction of the plane of the optical substrate does not overlap with the projection of the first area in the normal direction of the plane of the optical substrate. The second inter-layer coupling structure is located in the third area of the second functional layer, the first inter-layer coupling structure is located in the fourth area of the first functional layer, and the projection of the third area in the normal direction of the plane of the optical substrate partially or completely overlaps with the projection of the fourth area in the normal direction of the plane of the optical substrate. The optical structures at the functional layers of the optical chip do not need to be optically aligned in a mechanical manner.

With reference to the first aspect, in some designs of the first aspect, the second optical structure further includes the second inter-layer coupling structure located in a ninth area of the second functional layer. The optical chip further includes a second space layer disposed on the second functional layer, and a third functional layer disposed on the second space layer. A third optical structure is formed at the third functional layer. The third optical structure includes a third inter-layer coupling structure and a third intra-layer transmission structure, the third inter-layer coupling structure is located in a seventh area of the third functional layer, the third intra-layer transmission structure is located in an eighth area of the third functional layer, a projection of the eighth area in the normal direction of the plane of the optical substrate does not overlap with the projection of the first area in the normal direction of the plane of the optical substrate, and a projection of the ninth area in the normal direction of the plane of the optical substrate partially or completely overlaps with a projection of the seventh area in the normal direction of the plane of the optical substrate.

With reference to the first aspect, in some designs of the first aspect, the second intra-layer transmission structure includes a first input waveguide, a first output waveguide, and at least one first optical resonant cavity. The first output waveguide includes at least one waveguide structure, the at least one waveguide structure is in a one-to-one correspondence with the at least one first optical resonant cavity and is optically coupled to the at least one first optical resonant cavity, the first input waveguide includes one waveguide structure, and the waveguide structure is optically coupled to the at least one first optical resonant cavity.

With reference to the first aspect, in some designs of the first aspect, the second inter-layer coupling structure includes a first tapered structure formed at a first end of the first input waveguide.

With reference to the first aspect, in some designs of the first aspect, the first optical structure includes a second optical resonant cavity, and a first waveguide and a second waveguide that are parallel to each other, and one end of the first waveguide is optically coupled to the first tapered structure.

With reference to the first aspect, in some designs of the first aspect, a thickness of the second functional layer ranges from 150 nm to 5 µm.

With reference to the first aspect, in some designs of the first aspect, a thickness of the first functional layer ranges from 150 nm to 5 µm.

With reference to the first aspect, in some designs of the first aspect, the second intra-layer transmission structure is a Mach-Zehnder interferometer structure, and the Mach-Zehnder interferometer structure includes a first interference arm, a second interference arm, and a second input waveguide; and the second inter-layer coupling structure includes a second tapered structure formed at a first end of the second input waveguide.

With reference to the first aspect, in some designs of the first aspect, the first optical structure includes a straight waveguide structure, and one end of the straight waveguide structure is optically coupled to the second tapered structure.

With reference to the first aspect, in some designs of the first aspect, a thickness of the second functional layer ranges from 300 nm to 1 µm.

With reference to the first aspect, in some designs of the first aspect, a thickness of the first functional layer ranges from 200 nm to 500 nm.

According to a second aspect, a preparation method for an optical chip is provided. The method includes: sequentially depositing a first functional layer, a first space layer, and a second functional layer on an optical substrate to form a first structure; patterning the second functional layer to form a second optical structure, where the second optical structure is located in a first area of the second functional layer, and the second optical structure includes a second inter-layer coupling structure and a second intra-layer transmission structure; removing the first space layer in a second area to expose the first functional layer, where a projection of the second area in a normal direction of a plane of the first structure does not overlap with a projection of the first area in the normal direction of the plane of the first structure; and patterning the first functional layer in the second area to form a first optical structure, where the first optical structure includes a first inter-layer coupling structure and a first intra-layer transmission structure. The inter-layer coupling structure is configured for signal exchange between the first functional layer and the second functional layer, and the intra-layer transmission structure is configured to control signal transmission within the functional layers. The second inter-layer coupling structure is located in a third area of the second functional layer, the first inter-layer coupling structure is located in a fourth area of the first functional layer, and a projection of the third area in the normal direction of the plane of the first structure partially or completely overlaps with a projection of the fourth area in the normal direction of the plane of the first structure.

According to the preparation method for the optical chip provided in this embodiment of this application, unpatterned heterogeneous optical materials are first arranged on a same optical substrate in a stacked manner, and after stacking of material thin films is completed, a corresponding optical structure is sequentially patterned at each layer in a top-down order, to implement construction of a heterogeneously integrated optical chip. The method is based on a top-down sequential processing manner, and alignment of coupling structures between modules can be conveniently implemented, so that optical alignment between the modules does not need to be performed in a mechanical manner, and preparation efficiency of the optical chip is improved. In addition, in terms of controlling a thickness of a space layer, there is no need to arrange a space layer on an existing patterned structure in this method. Therefore, the thickness of the space layer can be accurately controlled.

With reference to the second aspect, in some implementations of the second aspect, before the patterning the second functional layer to form a second optical structure, a second space layer and a third functional layer are sequentially deposited on the first structure to form a second structure; the third functional layer is patterned to form a third optical structure, where the third optical structure is located in a fifth area of the third functional layer, and the third optical structure includes a third inter-layer coupling structure and a third intra-layer transmission structure; and the second space layer in a sixth area is removed to expose the second functional layer, where a projection of the sixth area in a normal direction of a plane of the second structure does not overlap a projection of the fifth area in the normal direction of the plane of the second structure.

With reference to the second aspect, in some implementations of the second aspect, the third inter-layer coupling structure is located in a seventh area of the third functional layer, and the third intra-layer transmission structure is located in an eighth area of the third functional layer. The second functional layer in the sixth area is patterned to form the second optical structure. The second optical structure further includes the second inter-layer coupling structure located in a ninth area of the second functional layer; and a projection of the eighth area in the normal direction of the plane of the second structure does not overlap with the projection of the sixth area in the normal direction of plane of the second structure, and a projection of the ninth area in the normal direction of the plane of the second structure partially or completely overlaps with a projection of the seventh area in the normal direction of the plane of the second structure.

With reference to the second aspect, in some implementations of the second aspect, the second functional layer is patterned to form the second intra-layer transmission structure. The second intra-layer transmission structure includes a first input waveguide, a first output waveguide, and at least one first optical resonant cavity. The first output waveguide includes at least one waveguide structure, the at least one waveguide structure is in a one-to-one correspondence with the at least one first optical resonant cavity and is optically coupled to the at least one first optical resonant cavity, the first input waveguide includes one waveguide structure, and the waveguide structure is optically coupled to the at least one first optical resonant cavity.

With reference to the second aspect, in some implementations of the second aspect, a first end of the first input waveguide is patterned into a first tapered structure to form the second inter-layer coupling structure.

With reference to the second aspect, in some implementations of the second aspect, the first functional layer in the second area is patterned to form a second optical resonant cavity, and a first waveguide and a second waveguide that are parallel to each other, and one end of the first waveguide is optically coupled to the first tapered structure.

With reference to the second aspect, in some implementations of the second aspect, a thickness of the second functional layer ranges from 150 nm to 5 µm.

With reference to the second aspect, in some implementations of the second aspect, a thickness of the first functional layer ranges from 150 nm to 5 µm.

With reference to the second aspect, in some implementations of the second aspect, the second functional layer is patterned to form a Mach-Zehnder interferometer structure. The Mach-Zehnder interferometer structure includes a first interference arm, a second interference arm, and a second input waveguide; and a second tapered structure formed at a first end of the second input waveguide is patterned.

With reference to the second aspect, in some implementations of the second aspect, the first functional layer in the second area is patterned to form a straight waveguide structure, and one end of the straight waveguide structure is optically coupled to the second tapered structure.

With reference to the second aspect, in some implementations of the second aspect, a thickness of the second functional layer ranges from 300 nm to 1 µm.

With reference to the second aspect, in some implementations of the second aspect, a thickness of the first functional layer ranges from 200 nm to 500 nm.

### BRIEF DESCRIPTION OF DRAWINGS

FIG. 1 is a diagram of a structure of an optical chip according to this application;
FIG. 2 is an example flowchart of a preparation method for an optical chip according to this application;
FIG. 3 is a diagram of a structure of a first structure according to this application;
FIG. 4 is a diagram of a structure of an example optical chip according to this application;
FIG. 5 is an example flowchart of another preparation method for an optical chip according to this application;
FIG. 6 is a diagram of a structure of an example of a formed first structure according to this application;
FIG. 7 is a diagram of a structure of another example optical chip according to this application;
FIG. 8 is an example flowchart of another preparation method for an optical chip according to this application;
FIG. 9 is diagram of an example structure of forming a first functional layer according to this application;
FIG. 10 is a diagram of a structure of another example of a formed first structure according to this application;
FIG. 11 is a diagram of an example of an optical module according to this application; and
FIG. 12 is a diagram of an example of a communication device according to this application.

### DESCRIPTION OF EMBODIMENTS

The following describes technical solutions of this application with reference to accompanying drawings.

In recent years, to adapt to explosive growth of information transmission and computing requirements in new application scenarios such as artificial intelligence, cloud, and high-performance computing, an all-optical information processing system gradually enters an integrated chip-based era. Compared with a conventional discrete optical information processing system constructed based on a manner in which different functional devices are connected by using an optical fiber, an integrated chip-based optical system (namely, an optical chip) is less susceptible to changes in temperature, magnetic field, noise, and the like, and has stronger anti-interference performance. In addition, due to integration for an overall size of the system, a bandwidth density of the optical information processing system can be increased by several orders of magnitude, and a power consumption density can be greatly reduced, to enable the optical information processing system to meet actual requirements for large-scale information processing.

In a structure of an optical chip, the optical chip may include a plurality of modules having different functions, such as optical signal generation, modulation, passive transmission, and detection, to transmit and process an optical signal on a single chip. These modules have different requirements on characteristics of required optical materials. For example, for an optical signal generation module and a detection module, a material having a high gain and a high absorption coefficient is needed; for a transmission module, a material having an optical transparency (that is, a low gain and a low absorption coefficient) characteristic is needed, to reduce an overall signal transmission loss of the chip; and for a modulation module, a material having a high optical nonlinearity needs to be used. However, for a single material, a high optical gain and a high absorption coefficient are contradictory to optical transparency. In addition, a commonly used optical material generally has a low optical nonlinear coefficient, and a material having a high optical nonlinearity usually has poor optical transparency and optical gain characteristics. Therefore, it is difficult to construct the optical chip based on a single material.

Currently, in a technology, the optical chip may be prepared by using a heterogeneous integration solution. That is, functional modules constructed based on different materials are integrated on a same substrate, and the functional modules are enabled to be connected to each other, so that an information carrier can be exchanged and transmitted between two modules. For example, a preprocessed optical transmitter/optical detection module is aligned with a passive transmission module and an optical nonlinear modulation module along a plane direction of a chip, to implement an optical connection between different modules along the plane direction of the chip, and construct a two-dimensional integrated optical chip. For another example, based on a template transfer method, a processed module structure is transferred beside another module, to obtain an optical connection along a plane direction of a chip, implement coupled transmission of an optical signal between two modules, and construct a two-dimensional integrated optical chip. For still another example, based on a flip chip manner, a preprocessed active laser module is optically connected to a passive optical waveguide along a direction perpendicular to a plane direction of a chip, to construct a three-dimensional integrated optical chip.

In a process of constructing a heterogeneously integrated optical chip, to implement high efficiency of an optical connection between different modules, that is, to transmit an optical signal between the different modules with a lowest possible coupling loss, an alignment deviation between the modules of different structures in a preparation process needs to be as small as possible. For a typical optical signal transmission structure on a chip, a feature size of the optical signal transmission structure generally ranges from hundreds of nanometers to several micrometers. This means that in a preparation process, an allowed alignment error between modules usually ranges from several nanometers to dozens of nanometers. However, for the preparation manner based on the foregoing heterogeneous integration, it is difficult to implement this precision. Therefore, preparation efficiency of such a heterogeneously integrated optical chip is limited.

In view of this, this application provides a preparation method for an optical chip. In the method, different types of unpatterned thin film materials are first combined, and patterning of functional structures is further performed on a material of each layer, so that during processing of a heterogeneously integrated optical chip, there is no need to perform high-precision mechanical alignment on different functional modules along an in-plane direction or a vertical direction of a chip. Therefore, preparation efficiency of the optical chip can be improved, and low-cost production of the optical chip can be implemented. In addition, a thickness of a space layer between different module layers can be accurately controlled, and a preparation yield can be improved.

The optical chip provided in embodiments of this application may be used in a scenario in which a heterogeneously integrated optical signal processing chip and modules are needed, such as high-speed optical transmission, optical communication, and optical computing.

Orientation or location relationships indicated by "width", "up", "down", "horizontal", "bottom", or the like in embodiments of this application are orientations or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms cannot be construed as a limitation on this application.

In embodiments of this application, "at least one" refers to one or more, and "a plurality of" refers to two or more. In addition, it should be understood that terms such as "first" and "second" in the description of this application are merely used for distinction and description, but shall not be understood as an indication or implication of relative importance or an indication or implication of a sequence.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" means one, two, or more; and "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. Terms "include", "have", and variants thereof all mean "include but are not limited to", unless otherwise specifically emphasized in another manner.

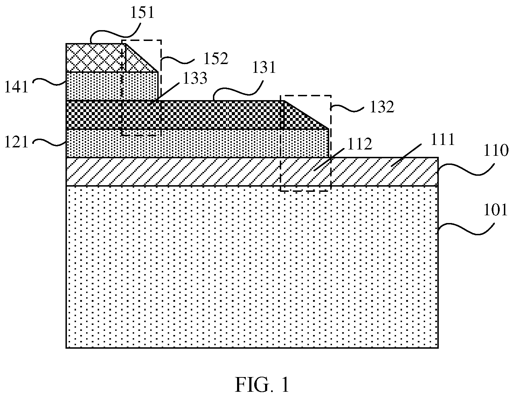

FIG. 1 is a side view of a structure of an optical chip obtained according to a preparation method for an optical chip provided in an embodiment of this application. It should be noted that in a diagram of FIG. 1, thicknesses of layers, proportional relationships between optical structures and layers, and the like are merely examples.

As shown in FIG. 1, the optical chip may include an optical substrate 101, a first functional layer 110 disposed on the optical substrate 101, a first space layer 120 disposed on the first functional layer 110, and a second functional layer 130 disposed on the first space layer 110. A second optical structure is formed at the second functional layer 130, the second optical structure includes a second intra-layer transmission structure 131 and a second inter-layer coupling structure 132, the second intra-layer transmission structure 131 is located in a first area of the second functional layer 130, and the second inter-layer coupling structure is located in a third area of the second functional layer 130. A first optical structure is formed at the first functional layer 110, the first optical structure is located in a second area of the first functional layer, and a projection of the second area in a normal direction of a plane of the optical substrate does not overlap with a projection of the first area in the normal direction of the plane of the optical substrate. The first optical structure includes a first intra-layer transmission structure 111 and a first inter-layer coupling structure 112, the first inter-layer coupling structure 112 is located in a fourth area of the first functional layer 110, and a projection of the third area in the normal direction of the plane of the optical substrate partially or completely overlaps with a projection of the fourth area in the normal direction of the plane of the optical substrate.

Optionally, the optical chip may further include a second space layer 140 and a third functional layer 150 that are stacked on the second functional layer 130, both a quantity of second space layers 140 and a quantity of third functional layers 150 may be N, and N is a positive integer. The second optical structure may further include a second inter-layer coupling structure 133 located in a ninth area of the second functional layer 130. A third optical structure is formed at the third functional layer 150. The third optical structure includes a third intra-layer transmission structure 151 and a third inter-layer coupling structure 152, the third inter-layer coupling structure 152 is located in a seventh area of the third functional layer 150, the third intra-layer transmission structure 151 is located in an eighth area of the third functional layer 150, a projection of the eighth area in the normal direction of the plane of the optical substrate does not overlap with the projection of the first area in the normal direction of the plane of the optical substrate, and a projection of the ninth area in the normal direction of the plane of the optical substrate partially or completely overlaps with a projection of the seventh area in the normal direction of the plane of the optical substrate.

The intra-layer transmission structure is configured to transmit a signal in a layer in which the intra-layer transmission structure is located. The inter-layer coupling structure is configured to exchange a signal in a layer in which the inter-layer coupling structure is located and a signal in another layer. The signal may be an optical signal. Optionally, the inter-layer coupling structure is a tapered structure.

It should be understood that the first functional layer 110, the second functional layer 130, and the third functional layer 150 may be monocrystalline inorganic thin films, polycrystalline inorganic thin films, or organic thin films.

The first space layer 120 and the second space layer 140 are used as space protective layers between different functional layers. A material of the first space layer 120 and the second space layer 140 may be an oxide of silicon, a nitride of silicon, an oxide of metal, a nitride of metal, or the like, for example, one or more of materials such as silicon dioxide, silicon nitride, aluminum oxide, aluminum nitride, hafnium oxide, zirconia, zinc oxide, and titanium dioxide. It should be noted that there may be one, two, or more first space layers 120 or second space layers 140. This is not limited in this application.

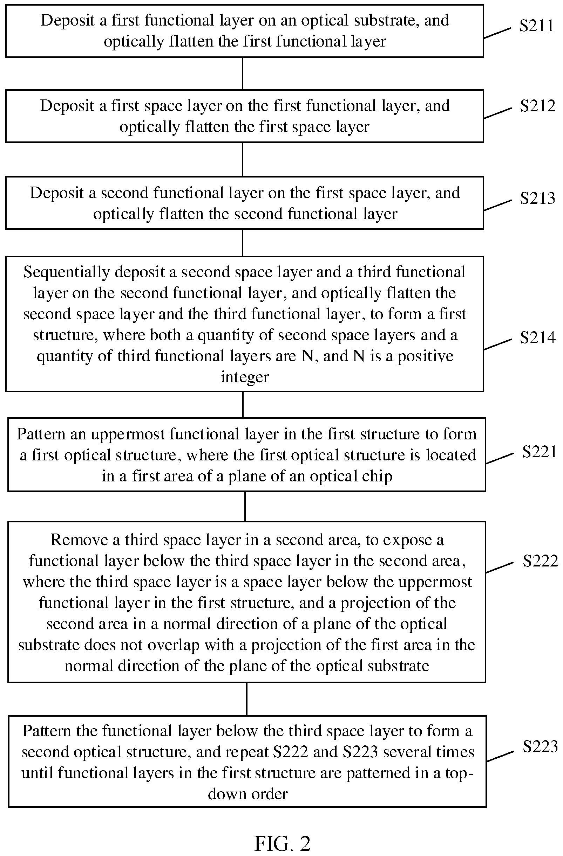

FIG. 2 is a schematic flowchart of a preparation method for an optical chip according to this application. The method may include the following several steps.

S211: Deposit a first functional layer 110 on an optical substrate 101, and optically flatten the first functional layer 110.

The optical substrate 101 may be made of silicon or another semiconductor material, for example, ceramic or glass.

The first functional layer 110 may be a functional layer for constructing an optical module, for example, an optical signal generation module, an optical signal modulation module, or an optical signal transmission module. A specific optical module constructed by using the first functional layer 110 may be determined based on an actual situation. This is not limited in this application.

Based on different optical modules constructed by using the first functional layer 110, the first functional layer 110 may be an optical thin film made of different materials. For example, the first functional layer 110 may be a monocrystalline inorganic thin film, a polycrystalline inorganic thin film, or an organic thin film.

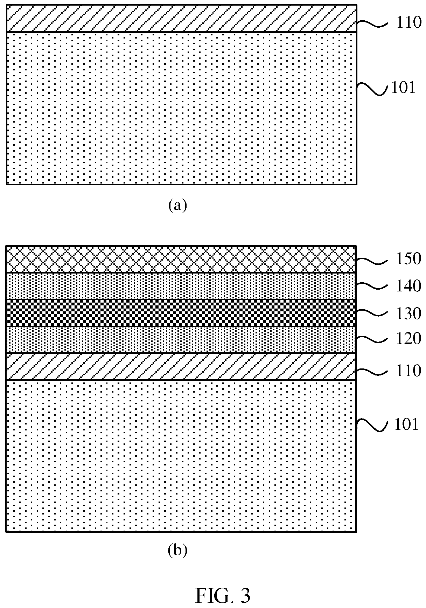

The depositing a first functional layer 110 on an optical substrate 101 includes but is not limited to the following manners: molecular beam epitaxy (molecular beam epitaxy, MBE), monocrystalline thin film bonding, and physical vapor deposition (physical vapor deposition, PVD). For example, the first functional layer 110 is formed by using a method such as magnetron sputtering, thermal evaporation, electron beam evaporation, pulsed laser deposition, electroplating, chemical vapor deposition (chemical vapor deposition, CVD), organic spin coating, or the like. When the first functional layer is deposited based on the foregoing process, a thickness of the first functional layer is easily controlled as a required parameter. A structure obtained after the first functional layer 110 is deposited on the optical substrate 101 is shown in (a) in FIG. 3.

S212: Deposit a first space layer 120 on the first functional layer 110, and optically flatten the first space layer 120.

The first space layer 120 may be subsequently used as a space protective layer between different functional layers. A material of the first space layer 120 may be an oxide of silicon (SiOₓ), a nitride of silicon (SiNₓ), an oxide of metal, a nitride of metal, or the like, for example, one or more of materials such as silicon dioxide, silicon nitride, aluminum oxide, aluminum nitride, hafnium oxide, zirconia, zinc oxide, and titanium dioxide. For example, the first space layer 120 may be deposited through PVD or CVD.

It should be noted that there may be one, two, or more first space layers 120. This is not limited in this application.

S213: Deposit a second functional layer 130 on the first space layer 120, and optically flatten the second functional layer 130.

The second functional layer 130 may be a functional layer for jointly constructing an optical module with the first functional layer 110, for example, is configured to jointly construct an optical signal generation module, an optical signal modulation module, or an optical signal transmission module. Alternatively, the second function is configured to construct another optical module, and the optical module is different from an optical module constructed at the first functional layer 110. An optical material of the second functional layer 130 may be the same as or different from that of the first functional layer 110.

It should be understood that a specific optical module constructed by using the second functional layer 130 may be determined based on an actual situation. This is not limited in this application. The second functional layer 130 may be a monocrystalline inorganic thin film, a polycrystalline inorganic thin film, or an organic thin film.

For a deposition manner of the second functional layer 130, refer to the first functional layer 110. Details are not described herein again.

Optionally, the method may further include S 114: Sequentially deposit a second space layer 140 and a third functional layer 150 on the second functional layer 130, and optically flatten the second space layer 140 and the third functional layer 150, where both a quantity of second space layers and a quantity of third functional layers may be N, and N is a positive integer.

For example, when N is 1, a structure obtained after the second space layer 140 and the third functional layer 150 are sequentially deposited on the second functional layer 130 is shown in (b) in FIG. 3.

For an optical material and a deposition manner of the second space layer 140, refer to the first space layer 120. A material of the third functional layer 150 may be the same as that of at least one of the first functional layer 110 and the second functional layer 130. Alternatively, an optical material of the third functional layer 150 is different from that of the first functional layer 110 and the second functional layer 130. The third functional layer 150 may be configured to construct a third optical module. The third optical module may be the same as or different from an optical module constructed at the first functional layer 110 and/or an optical module constructed at the second functional layer 130. In this application, whether to deposit the second space layer 140 and the third functional layer 150 may be determined based on an actual application scenario.

A first structure in which a plurality of layers of optical thin films share a substrate may be obtained by performing the foregoing steps. The first structure may include at least two functional layers (the first functional layer 110 and the second functional layer 130) and at least one space layer (the first space layer 120), and a material of each layer is not patterned in advance.

S221: Pattern an uppermost functional layer in the first structure to form a first optical structure.

The uppermost functional layer in the first structure may be the third functional layer or the second functional layer. The following uses an example in which the uppermost functional layer is the third functional layer 150 when N is 1 for description.

The first optical structure may include an intra-layer transmission structure 151 configured to control transmission of an optical signal in the module, and an inter-layer coupling structure 152 configured to perform signal exchange with an optical module at another layer. The first optical structure is located in a first area of a plane of the optical chip, and the first area includes an area #1 in which the inter-layer coupling structure 152 is located and an area #2 in which the intra-layer transmission structure 151 is located. The area #2 and an area in which an intra-layer transmission structure at another layer is located are mutually staggered along a plane direction of the chip. In other words, a projection of the area #2 in a normal direction of a plane of the optical substrate does not overlap with a projection, in the normal direction of the plane of the optical substrate, of the area in which the intra-layer transmission structure at the another layer is located. A projection of the area #1 in the normal direction of the plane of the optical substrate partially or completely overlaps with a projection, in the normal direction of the plane of the optical substrate, of an area in which an inter-layer coupling structure at another layer (for example, the second functional layer) is located.

A manner of patterning the uppermost functional layer in the first structure is not limited in this application. For example, the patterning method may be based on an electron beam lithography or dry etching technology.

S222: Remove a third space layer in a second area, to expose a functional layer below the third space layer in the second area, where the third space layer is a space layer below the uppermost functional layer in the first structure, and a projection of the second area in the normal direction of the plane of the optical substrate does not overlap with a projection of the first area in the normal direction of the plane of the optical substrate.

The third space layer may be the first space layer 120 or the second space layer 140. The following uses an example in which the third space layer is the second space layer 140 when N is 1 for description.

After the second space layer 140 in the second area is removed, the second space layer 140 is shown as a second space layer 141 in FIG. 1. The space layer in the second area is removed, so that a functional layer (the second functional layer 130) below the second space layer 140 may be exposed.

S223: Pattern the second functional layer in the second area to form a second optical structure.

The functional layer in the second area may be the second functional layer 130 or the first functional layer 120. The following uses an example in which the functional layer is the second functional layer 130 when N is 1 for description.

The second functional layer 130 in the second area is patterned to form the second optical structure. The second optical structure may include an intra-layer transmission structure 131 configured to control transmission of an optical signal in the module, and an inter-layer coupling structure configured to perform signal exchange with another module. The intra-layer transmission structure 131 is located in an area #3 of the second functional layer 130, and a projection of the area #3 in the normal direction of the plane of the optical substrate does not overlap with a projection, in the normal direction of the plane of the optical substrate, of an area (for example, the first area) in which an optical structure at another layer is located. The inter-layer coupling structure may include an inter-layer coupling structure 132 (an example of a second inter-layer coupling structure). The inter-layer coupling structure 132 is located in an area #4 of the second functional layer, and a projection of the area #4 in the normal direction of the plane of the optical substrate partially or completely overlaps with a projection, in the normal direction of the plane of the optical substrate, of an area in which an inter-layer coupling structure at another layer (a lower functional layer) is located.

Optionally, the inter-layer coupling structure may further include an inter-layer coupling structure 133 (an example of the second inter-layer coupling structure). The inter-layer coupling structure 133 is located in an area #5 of the second functional layer 130, and a projection of the area #5 in the normal direction of the plane of the optical substrate partially or completely overlaps with a projection, in the normal direction of the plane of the optical substrate, of an area (for example, the area #1 in which the inter-layer coupling structure 152 is located) in which an inter-layer coupling structure at another layer (an upper functional layer) is located.

S224: Remove the second space layer in a third area to expose a functional layer below the second space layer in the third area, and pattern the functional layer in the third area to form the first optical structure.

The second space layer may be the foregoing first space layer 120. After the first space layer 120 in the third area is removed, the first space layer 120 is shown as a first space layer 121 in FIG. 1. The space layer in the third area is removed, so that a functional layer (the first functional layer 110) below the first space layer 120 may be exposed.

The first functional layer 110 in the third area is patterned to form the first optical structure. The first optical structure may include an intra-layer transmission structure 111 configured to control transmission of an optical signal in the module, and an inter-layer coupling structure 112 configured to perform signal exchange with another module. The intra-layer transmission structure 111 is located in an area #6 of the first functional layer 110, and a projection of the area #6 in the normal direction of the plane of the optical substrate does not overlap with a projection, in the normal direction of the plane of the optical substrate, of an area (for example, the second area) in which an optical structure at another layer is located. The inter-layer coupling structure 112 is located in an area #7 of the second functional layer, and a projection of the area #7 in the normal direction of the plane of the optical substrate partially or completely overlaps with a projection, in the normal direction of the plane of the optical substrate, of an area in which an inter-layer coupling structure at another layer (an upper functional layer) is located.

S122 and S 123 are repeated several times until functional layers in the first structure are patterned in a top-down order, as shown in FIG. 1. A patterned structure at each functional layer may include an intra-layer transmission structure configured to control transmission of an optical signal in the module and an inter-layer coupling structure configured to perform signal exchange with another module, to implement construction of a three-dimensional heterogeneously integrated optical chip.

According to the preparation method for the optical chip provided in this embodiment of this application, a plurality of unpatterned heterogeneous optical materials are first arranged on a same optical substrate in a stacked manner, and after stacking of material thin films is completed, a corresponding optical structure is sequentially patterned at each layer in a top-down order, to implement construction of a heterogeneously integrated optical chip. The method is based on a top-down sequential processing manner, and alignment of coupling structures between modules can be naturally implemented, so that optical alignment between the modules does not need to be performed in a mechanical manner, and preparation efficiency of the optical chip is improved. In addition, in terms of controlling a thickness of a space layer, there is no need to arrange a space layer on an existing structure in this method. Therefore, the thickness of the space layer is accurately controlled.

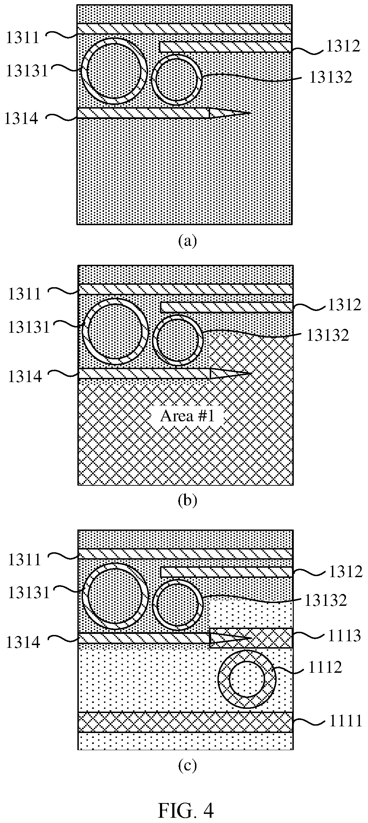

The following describes in detail an optical chip and a preparation method therefor provided in this application with reference to FIG. 4 to FIG. 10.

(c) in FIG. 4 is a top view of a structure of an optical chip obtained according to a preparation method for an optical chip provided in an embodiment of this application. It should be noted that in a diagram shown in (c) in FIG. 4, proportional relationships between optical structures and layers are merely examples.

As shown in (c) in FIG. 4, the optical chip may include an optical substrate, an optical thin film #1 disposed on the optical substrate, a space layer #1 disposed on the optical thin film #1, and an optical thin film #2 disposed on the space layer #1.

The optical thin film #1 may be made of a material having an optical gain characteristic. For example, the optical thin film #1 may be an organic thin film, for example, a lead sulfide quantum-dot thin film, a cadmium selenide thin film, a polymethyl methacrylate (PMMA) thin film, or the like. The optical thin film #2 may be made of a material having a high optical refractive index. For example, the optical thin film #2 is a monocrystalline inorganic thin film, for example, a monocrystalline silicon thin film, a lithium niobate (LiNbO3) thin film, or the like.

An optical structure #2 is formed at the optical thin film #2, and the optical structure #2 includes an intra-layer transmission structure #2 and an inter-layer coupling structure #2.

The intra-layer transmission structure #2 may include an output waveguide. For example, the output waveguide includes a first waveguide 1311 and a second waveguide 1312. The first waveguide 1311 and the second waveguide 1312 are configured to output two channels of signal light of different wavelengths. It should be understood that a quantity of output waveguides may be set based on an actual situation, the first waveguide 1311 and the second waveguide 1312 are merely examples, and the output waveguide may further include one or more output waveguide structures.

The intra-layer transmission structure #2 may further include a first optical resonant cavity, and the first optical resonant cavity may continuously resonate and amplify an optical signal in the resonant cavity based on optical resonance effect. For example, the first optical resonant cavity may be an optical microring resonant cavity, an F-P resonant cavity, or the like. For example, the first optical resonant cavity is an optical microring resonant cavity. The first optical resonant cavity may include two microrings (a first microring 13131 and a second microring 13132) with different radiuses. The first waveguide 1311 is optically coupled to the first microring 13131, and the second waveguide 1312 is optically coupled to the second microring 13132. It should be understood that a quantity of microrings may be set based on an actual situation, and there may alternatively be one or more microrings.

The intra-layer transmission structure #2 may further include an input waveguide. For example, the input waveguide includes a third waveguide 1314, and the third waveguide 1314 is optically coupled to the first optical resonant cavity 1313. It should be understood that a quantity of input waveguides may be set based on an actual situation. This is not limited in this application.

The inter-layer coupling structure #2 includes a tapered structure patterned at an end of the third waveguide 1314.

The intra-layer transmission structure #2 is located in an area #1 of the optical thin film #2, and the inter-layer coupling structure #2 is located in an area #2 in a plane of the chip.

An optical structure #1 is formed at the optical thin film #1, and the optical structure #1 includes an intra-layer transmission structure #1 and an inter-layer coupling structure #1.

The intra-layer transmission structure #1 may include a fourth waveguide 1111 and a second optical resonant cavity 1112. The second optical resonant cavity 1112 may be an optical microring resonant cavity, an F-P resonant cavity, or the like. For example, the second resonant cavity 1112 is an optical microring resonant cavity. The fourth waveguide 1111 may be a straight waveguide optically coupled to the optical microring resonant cavity, and is located below the optical microring resonant cavity. A quantity of fourth waveguides 1111 may be set based on an actual situation. This is not limited in this application.

The intra-layer transmission structure #1 may further include a fifth waveguide 1113 optically coupled to the optical microring resonant cavity, and the fifth waveguide 1113 is located on the optical microring resonant cavity. An end of the fifth waveguide 1113 may be used as the inter-layer coupling structure #1.

The intra-layer transmission structure #1 is located in an area #3 of the optical thin film #1, and the inter-layer coupling structure #1 is located in an area #4 in the plane of the chip; a projection of the area #3 in a normal direction of a plane of the optical substrate does not overlap with a projection, in the normal direction of the plane of the optical substrate, of an area in which the second optical structure is located; and a projection of the area #4 in the normal direction of the plane of the optical substrate partially or completely overlaps with a projection of the area #2 in the normal direction of the plane of the optical substrate. Therefore, the inter-layer coupling structure #1 and the inter-layer coupling structure #2 can efficiently couple an output signal in the optical thin film #1 to the optical thin film #2 without undergoing optical alignment in a mechanical manner, to implement cross-layer signal transmission.

In a possible design, a width of the fifth waveguide 1113 may be set to be greater than a width of the area #2, as shown in (c) in FIG. 4.

Based on the foregoing optical chip, for operation of the chip, ultraviolet pump light may be coupled into the input waveguide constructed by using a lead sulfide material, to enable a lead sulfide module to generate a broadband laser signal in a near-infrared communication band. The signal is coupled into a silicon module through a lead sulfide waveguide and a tapered silicon waveguide structure that overlap with each other along a plane direction of the chip. Based on filter effect in the silicon module, two narrowband laser signals of different wavelengths are finally output.

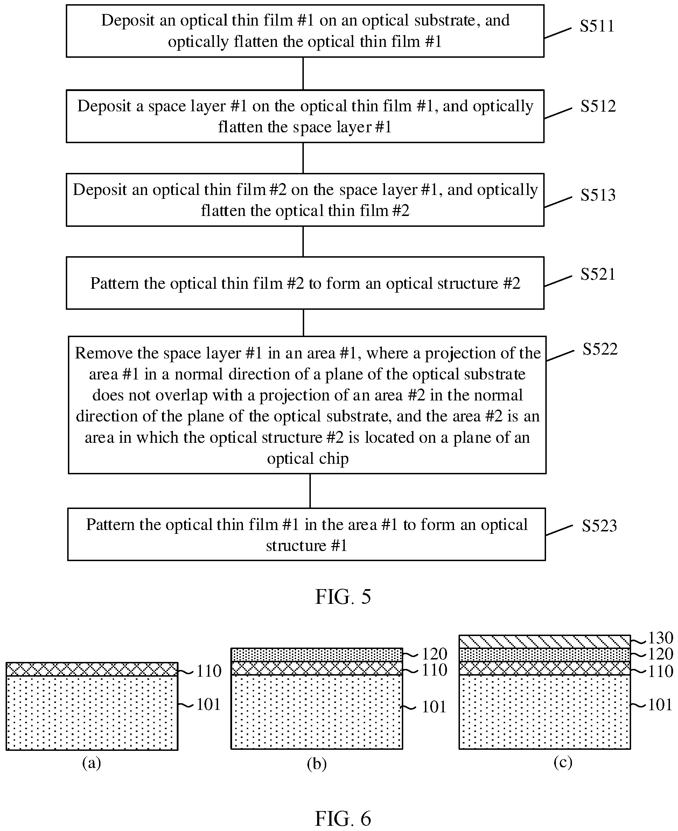

FIG. 5 is a schematic flowchart of a preparation method for an optical chip according to this application. The optical chip prepared by using the method may be used in fields such as integrated optical communication. The method may include the following several steps.

S511: Deposit an optical thin film #1 (an example of a first functional layer) on an optical substrate, and optically flatten the optical thin film #1.

For a material of the optical substrate, refer to the description in S211. The optical thin film #1 may be made of a material having an optical gain characteristic. For example, the optical thin film #1 may be an organic thin film, for example, a lead sulfide quantum-dot thin film, a cadmium selenide (CdSe) thin film, a polymethyl methacrylate (PMMA) thin film, or the like.

For example, that the optical thin film #1 is a lead sulfide quantum-dot thin film is used for description. The depositing an optical thin film #1 on an optical substrate may include: dissolving lead sulfide quantum dots in a toluene solvent, and coating the solution on a surface of a quartz glass substrate through spin coating by using a spin coater; and in a process of spin coating, volatilizing the related solvent by using high-speed rotation of a vacuum sucker in the spin coater, to enable the lead sulfide quantum dots to form a dense optical thin film on the surface of quartz glass. A concentration of the solution and a rotation speed of the spin coater are controlled, so that a thickness of the optical thin film #1 may be controlled to be 150 nm to 5 µm. For example, the thickness of the optical thin film #1 may be controlled to be 1 µm.

A structure obtained after the optical thin film #1 is deposited on the optical substrate is shown in (a) in FIG. 6.

S512: Deposit a space layer #1 (an example of a first space layer) on the optical thin film #1, and optically flatten the space layer #1.

This step is similar to S212. For example, the space layer #1 may be a silicon oxide thin film. The depositing a space layer #1 on the optical thin film #1 may include a thermal evaporation manner. Evaporation time is controlled, so that a thickness of the thin film may be controlled to be 20 nm to 500 nm. The thickness of the space layer #1 may be set based on an actual situation. This is not limited in this application. For example, the thickness of the first space layer may be 150 nm. A structure obtained after the space layer #1 is deposited on the optical thin film #1 is shown in (b) in FIG. 6.

S513: Deposit an optical thin film #2 (an example of a second functional layer) on the space layer #1, and optically flatten the optical thin film #2.

The optical thin film #2 may be made of a material having a high optical refractive index. For example, the optical thin film is a monocrystalline inorganic thin film, for example, a monocrystalline silicon thin film, a lithium niobate (LiNbO3) thin film, a silicon nitride thin film, or the like.

For example, in this application, an example in which the optical thin film #2 is a monocrystalline silicon thin film is used for description. The depositing an optical thin film #2 on the space layer #1 includes: on a material on which the silicon oxide thin film (the space layer #1) is evaporated, bonding a layer of a monocrystalline silicon wafer to a surface based on a silicon-silicon bonding manner. The monocrystalline silicon thin film undergoes grinding and chemical mechanical polishing (chemical mechanical polishing, CMP), so that the bonded monocrystalline silicon thin film is thinned to 150 nm to 5 µm. A specific thickness of the monocrystalline silicon thin film may be determined based on an actual situation. For example, the thickness of the monocrystalline silicon thin film is 220 nm.

It may be understood that the optical thin film #2 may alternatively be another material, for example, a polycrystalline inorganic thin film, an organic thin film, or the like.

A structure obtained after the optical thin film #2 is deposited on the space layer #1 is shown in (c) in FIG. 6.

S521: Pattern the optical thin film #2 to form an optical structure #2.

The optical structure #2 may include an intra-layer transmission structure #2 configured to control transmission of an optical signal in the module, and an inter-layer coupling structure #2 configured to perform signal exchange with another module.

The intra-layer transmission structure #2 may include an output waveguide. For example, the patterning the optical thin film #2 includes: patterning a first waveguide 1311 and a second waveguide 1312 on the monocrystalline silicon thin film. The first waveguide 1311 and the second waveguide 1312 are configured to output two channels of signal light of different wavelengths. A structure of the output waveguide is shown in (a) in FIG. 4.

It should be understood that a quantity of output waveguides may be set based on an actual situation, the first waveguide 1311 and the second waveguide 1312 are merely examples, and one or more output waveguide structures may be further patterned on the optical thin film #2.

The patterning the optical thin film #2 may further include: patterning a first optical resonant cavity on the monocrystalline silicon thin film, where the first optical resonant cavity may continuously resonate and amplify an optical signal in the resonant cavity based on optical resonance effect. For example, the first optical resonant cavity may be an optical microring resonant cavity, a Fabry-Perot (Fabry-Pérot, F-P) resonant cavity (cavity), or the like. In this application, an example in which the first optical resonant cavity is an optical microring resonant cavity is used for description. The first optical resonant cavity includes two microrings (a first microring 13131 and a second microring 13132) with different radiuses. The first waveguide 1311 is optically coupled to the first microring 13131, and the second waveguide 1312 is optically coupled to the second microring 13132, as shown in (a) in FIG. 4. It should be understood that a quantity of microrings may be set based on an actual situation, and there may alternatively be one or more microrings.

The patterning the optical thin film #2 may further include: patterning an input waveguide. For example, the input waveguide includes a third waveguide 1314, and the third waveguide 1314 is optically coupled to the first optical resonant cavity 1313, as shown in (a) in FIG. 4. It should be understood that a quantity of input waveguides may be set based on an actual situation. This is not limited in this application.

Based on the optical resonance effect of the first optical resonant cavity, when a broadband laser beam is input into the third waveguide 1314, laser with different wavelength components respectively resonates in the first microring 13131 and the second microring 13132, and is respectively coupled to the first waveguide 1311 and the second waveguide 1312, to implement simultaneous output of different wavelengths. In addition, for the input waveguide (the third waveguide 1314), an end of the input waveguide (the third waveguide 1314) is patterned into a tapered structure with a gradually narrowed width. The structure may effectively couple, based on evanescent wave coupling effect, an optical signal transmitted in the optical thin film #1 below to the layer. In other words, the structure may be used as the inter-layer coupling structure #2.

The foregoing manner of patterning the optical thin film includes but is not limited to manners based on physical bombardment or chemical etching, such as ultraviolet lithography, electron beam lithography, dry etching, wet etching, and ion beam etching. In addition, in a processing process of an optical structure (for example, an intra-layer transmission structure or an inter-layer coupling structure), metal electrodes may alternatively be arranged around the optical structure through electron beam evaporation, thermal evaporation, magnetron sputtering, or the like. These metal electrodes do not transmit an optical signal, but are configured to apply an electric field, to change an optical property of a material that is used to transmit the optical signal and that is around the metal electrodes, to affect a transmission status of the optical signal.

S522: Remove the space layer #1 in an area #1, where a projection of the area #1 in a normal direction of a plane of the optical substrate does not overlap with a projection of an area #2 in the normal direction of the plane of the optical substrate, and the area #2 is an area in which the optical structure #2 is located.

The area #1 is shown in (b) in FIG. 4. The space layer #1 in the area #1 is removed, so that the optical thin film #1 in the area #1 may be exposed.

S523: Pattern the optical thin film #1 in the area #1 to form an optical structure #1.

The optical structure #1 may include an intra-layer transmission structure #1 configured to control transmission of an optical signal in the structure, and an inter-layer coupling structure #1 configured to perform signal exchange with another functional layer.

The intra-layer transmission structure #1 may include a fourth waveguide 1111 and a second optical resonant cavity 1112. The second optical resonant cavity 1112 may be an optical microring resonant cavity, an F-P resonant cavity, or the like. For example, the second resonant cavity 1112 is an optical microring resonant cavity. The fourth waveguide 1111 may be a straight waveguide optically coupled to the optical microring resonant cavity, and is located below the optical microring resonant cavity. A quantity of fourth waveguides 1111 may be set based on an actual situation. This is not limited in this application.

The intra-layer transmission structure #1 further includes a fifth waveguide 1113 optically coupled to the optical microring resonant cavity, and the fifth waveguide 1113 is located on the optical microring resonant cavity. A projection of an end of the fifth waveguide 1113 in the normal direction of the plane of the optical substrate partially or completely overlaps with a projection of the tapered structure at the end of the third waveguide 1314 in the normal direction of the plane of the optical substrate, as shown in (c) in FIG. 4. In other words, a projection, in the normal direction of the plane of the optical substrate, of an area in which the fifth waveguide 1113 is located in the optical plane partially or completely overlaps with a projection, in the normal direction of the plane of the optical substrate, of an area in which the inter-layer coupling structure #2 is located in the optical plane. In a possible patterning manner, a width of the fifth waveguide 1113 is greater than a width of an area #3, as shown in (c) in FIG. 4. Therefore, the fifth waveguide 1113 and the third waveguide 1514 do not need to be optically aligned in a mechanical manner. The fifth waveguide 1113 is enabled to be coupled to the third waveguide 1514 through patterning, so that an output signal in the optical thin film #1 can be efficiently coupled to the optical thin film #2, to implement cross-layer signal transmission.

The foregoing manner of patterning the optical thin film includes but is not limited to manners based on physical bombardment or chemical etching, such as ultraviolet lithography, electron beam lithography, dry etching, wet etching, and ion beam etching. In addition, in a processing process of an optical structure (for example, an intra-layer transmission structure or an inter-layer coupling structure), metal electrodes may alternatively be arranged around the optical structure through electron beam evaporation, thermal evaporation, magnetron sputtering, or the like. These metal electrodes do not transmit an optical signal, but are configured to apply an electric field, to change an optical property of a material that is used to transmit the optical signal and that is around the metal electrodes, to affect a transmission status of the optical signal.

According to the preparation method for the optical chip provided in this embodiment of this application, a three-dimensional heterogeneously integrated optical transmitter chip having a dual-wavelength output channel is constructed. In the method, a plurality of unpatterned heterogeneous optical materials are first arranged on a same optical substrate in a stacked manner, and after stacking of material thin films is completed, a corresponding optical structure is sequentially patterned at each layer in a top-down order, to implement construction of a heterogeneously integrated optical chip. According to the method, optical alignment between modules does not need to be performed in a mechanical manner, and preparation efficiency of the optical chip is improved. In addition, in terms of controlling a thickness of a space layer, there is no need to arrange a space layer on an existing structure in this method. Therefore, the thickness of the space layer is accurately controlled.

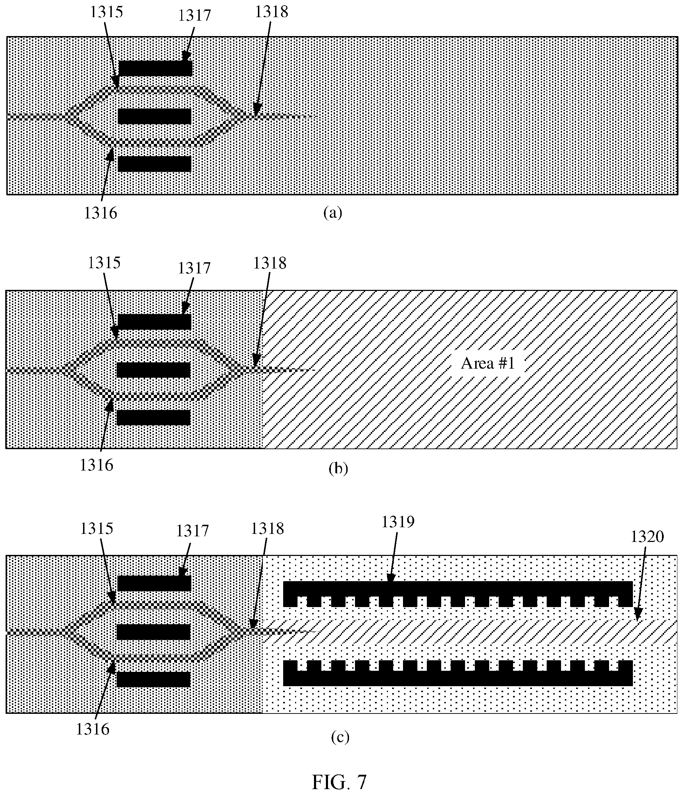

(c) in FIG. 7 is a top view of a structure of an optical chip obtained according to a preparation method for an optical chip provided in an embodiment of this application. It should be noted that in a diagram shown in (c) in FIG. 7, proportional relationships between optical structures and layers are merely examples.

As shown in (c) in FIG. 7, the optical chip may include an optical substrate, an optical thin film #3 disposed on the optical substrate, a space layer #2 disposed on the optical thin film #3, and an optical thin film #4 disposed on the space layer #2.

The optical thin film #3 may be made of a material having a large optical second-order nonlinear coefficient. For example, the optical thin film #3 may be a monocrystalline inorganic thin film, for example, a monocrystalline lithium niobate thin film, a monocrystalline lithium tantalate thin film, or the like. The optical thin film #4 may be made of a material having a semiconductor characteristic, and an optical-electrical characteristic of the optical thin film #4 can be changed through doping. For example, the optical thin film #4 may be a monocrystalline inorganic thin film, for example, a monocrystalline silicon thin film.

An optical structure #4 is formed at the optical thin film #4. The optical structure #4 may include an intra-layer transmission structure #4 configured to control transmission of an optical signal in the module, and an inter-layer coupling structure #4 configured to perform signal exchange with another module. The optical structure #4 is configured to: split an input optical signal, independently transmit the input optical signal, and then combine the input optical signal.

For example, the optical structure #4 may be a Mach-Zehnder interferometer structure. Specifically, the intra-layer transmission structure #4 includes two arms (1315 and 1316) of the Mach-Zehnder interferometer, and the two arms (1315 and 1316) are prepared into a PIN structure through doping. The intra-layer transmission structure #4 further includes metal electrodes 1317 disposed on both sides of each interference arm and an input waveguide 1318. An end of the input waveguide 1318 is patterned into a tapered structure with a gradually narrowed width. The structure may effectively couple, based on evanescent wave coupling effect, an optical signal transmitted in the optical thin film #3 below to a silicon-based optical structure of the layer. That is, the tapered structure may be used as the inter-layer coupling structure #4.

An optical structure #3 is formed at the optical thin film #3, and the optical structure #3 includes an intra-layer transmission structure #3 and an inter-layer coupling structure #3. For example, the optical structure #3 may be a lithium niobate straight waveguide structure, where a projection, in the normal direction of the plane of the optical substrate, of an area in which one end of the straight waveguide is located partially or completely overlaps with a projection, in the normal direction of the plane of the optical substrate, of an area in which a tapered waveguide part in the optical structure #4 is located, to implement efficient coupling of an optical signal between the two modules based on the evanescent wave coupling effect. Therefore, the inter-layer coupling structures in the optical structure #3 and the optical structure #4 do not need to be optically aligned in a mechanical manner.

Optionally, chromium electrodes 1319 may be further prepared on two sides of the straight waveguide. The chromium electrodes 1319 are configured to polarize the straight waveguide, and after the polarization is completed, the chromium electrodes 1319 may be removed through wet etching or the like.

Based on the foregoing optical chip, for operation of the chip, a high-voltage pulse electrical signal may be applied to the chromium electrodes, periodic domain inversion (domain inversion) of a lithium niobate waveguide is implemented, and a periodically polarized lithium niobate waveguide is constructed, to improve efficiency of nonlinear frequency conversion; an infrared pulse optical signal is input into the lithium niobate waveguide, and based on a frequency up/down-conversion process, a photon pair having an entanglement characteristic may be generated in the lithium niobate waveguide, and transmitted to a silicon-based Mach-Zehnder interference structure through a coupling area of the lithium niobate waveguide and the tapered silicon waveguide; and a voltage applied to two arms of the interference structure is adjusted, so that modulation for the entangled photon pair can be implemented.

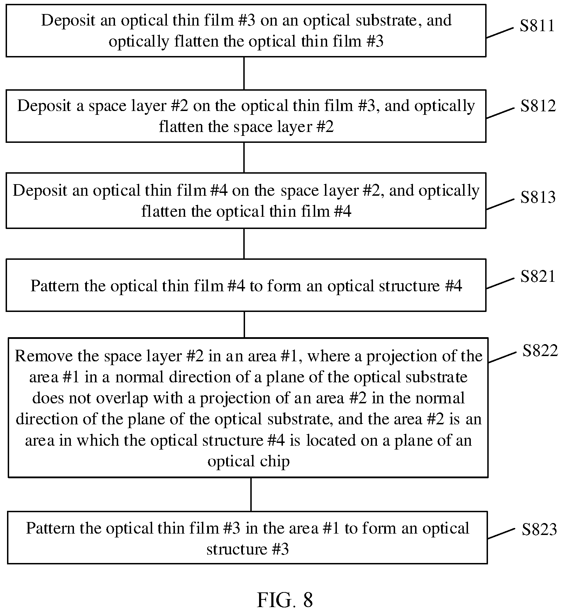

FIG. 8 is a schematic flowchart of a preparation method for an optical chip according to this application. The optical chip prepared by using the method may be used in fields such as optical quantum computing. The method may include the following several steps.

S811: Deposit an optical thin film #3 (an example of a first functional layer) on an optical substrate, and optically flatten the optical thin film #3.

For a material of the optical substrate, refer to the description in S211. The optical thin film #3 may be made of a material having a large optical second-order nonlinear coefficient. For example, the first optical thin film may be a monocrystalline inorganic thin film, for example, a monocrystalline lithium niobate thin film, a monocrystalline lithium tantalate thin film, or the like.

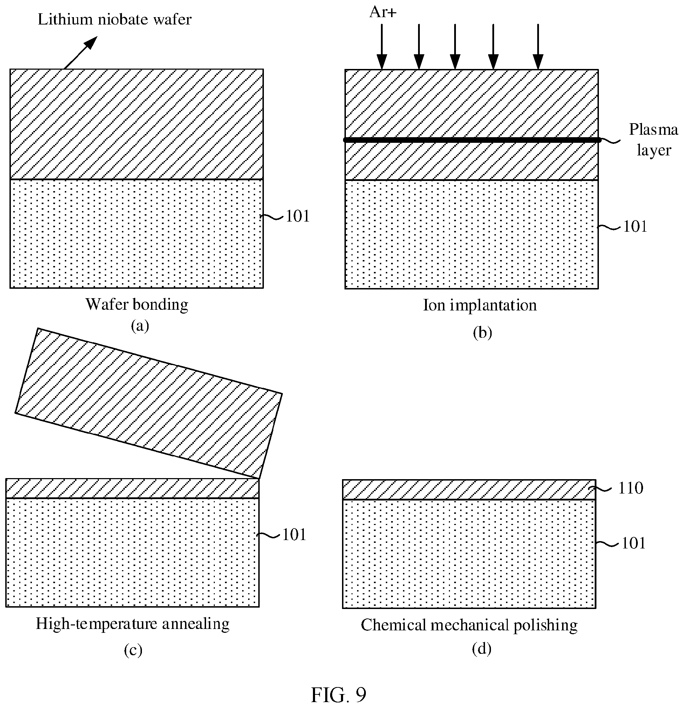

For example, the optical thin film #3 is a monocrystalline lithium niobate thin film. The depositing an optical thin film #3 on an optical substrate may include: bonding a lithium niobate wafer to the optical substrate in a high-temperature bonding manner (as shown in (a) in FIG. 9); after the bonding is completed, implanting argon ions (Ar+), to enable the lithium niobate wafer to form an ion damaged layer (a plasma layer) at a specific thickness (as shown in (b) in FIG. 9); further, dissociating the lithium niobate wafer at the damaged layer through high-temperature annealing (as shown in (c) in FIG. 9); and finally, performing chemical mechanical polishing, to retain a lithium niobate thin film of a specific thickness on the optical substrate (as shown in (d) in FIG. 9), and implement bonding of the monocrystalline lithium niobate thin film on the optical substrate. A thickness of the optical thin film #3 may be controlled to be 150 nm to 5 µm through polishing. For example, the thickness of the optical thin film #3 may be controlled to be 600 nm.

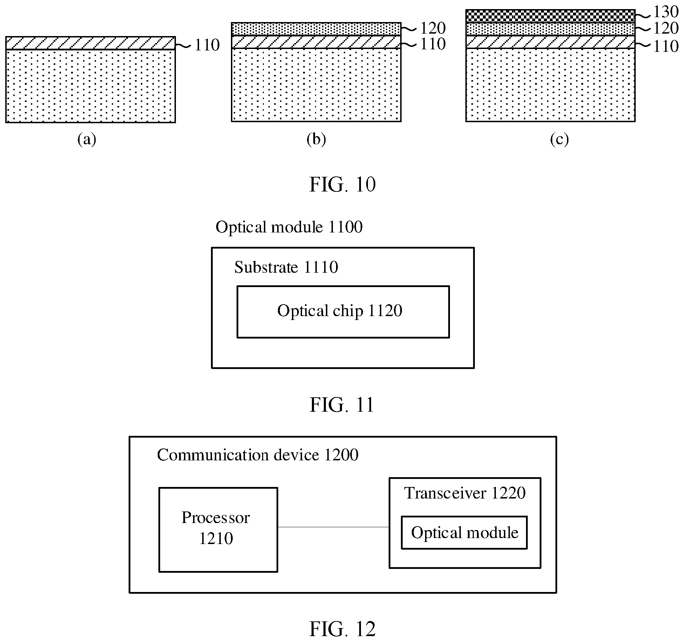

A structure obtained after the optical thin film #3 is deposited on the optical substrate is shown in (a) in FIG. 10.

S812: Deposit a space layer #2 on the optical thin film #3, and optically flatten the space layer #2.

This step is similar to S612. Details are not described herein again. A structure obtained after the space layer #2 is deposited on the optical thin film #3 is shown in (b) in FIG. 10.

S813: Deposit an optical thin film #4 (an example of a second functional layer) on the space layer #2, and optically flatten the optical thin film #4.

The optical thin film #4 may be made of a material having a semiconductor characteristic, and an optical-electrical characteristic of the optical thin film #4 can be changed through doping. For example, the optical thin film #4 may be a monocrystalline inorganic thin film, for example, a monocrystalline silicon thin film.

The depositing an optical thin film #4 on the space layer #2 may include: on a material on which a silicon oxide thin film (an example of the space layer #2) is evaporated, bonding a layer of a monocrystalline silicon wafer (an example of the optical thin film #4) to the silicon oxide thin film based on a silicon-silicon bonding manner, and polishing and thinning the bonded monocrystalline silicon thin film to 150 nm to 5 µm through grinding and chemical mechanical polishing, where a specific thickness of the monocrystalline silicon thin film may be determined based on an actual situation. For example, the thickness of the monocrystalline silicon thin film is 220 nm.

It may be understood that the optical thin film #4 may alternatively be another material, for example, a silicon nitride thin film, a silicon oxide thin film, or the like. This is not limited in this application.

A structure obtained after the optical thin film #4 is deposited on the space layer #2 is shown in (c) in FIG. 10.

S821: Pattern the optical thin film #4 to form an optical structure #4.

The optical structure #4 may include an intra-layer transmission structure #4 configured to control transmission of an optical signal in the module, and an inter-layer coupling structure #4 configured to perform signal exchange with another module.

The optical structure #4 is configured to: split an input optical signal, independently transmit the input optical signal, and then combine the input optical signal. For example, the optical structure #4 may be a Mach-Zehnder (Mach-Zehnder) interferometer (interferometer) structure, as shown in (a) in FIG. 7.

Specifically, two arms (a first interference arm 1315 and a second interference arm 1316) of the Mach-Zehnder interferometer may be prepared into a PIN structure through doping based on ion implantation, and metal electrodes 1317 with a thickness of about 200 nm are arranged on both sides of each interference arm through electron beam evaporation, so that an optical transmission property of the silicon waveguide can be changed by applying an external electric field. In addition, for an input waveguide 1318 (an example of a second input waveguide), an end of the input waveguide 1318 is patterned into a tapered structure with a gradually narrowed width. The structure may effectively couple, based on evanescent wave coupling effect, an optical signal transmitted in the optical thin film #3 below to a silicon-based optical structure of the layer. That is, the tapered structure may be used as the inter-layer coupling structure #4.

It should be understood that the optical structure #4 may alternatively be another structure, for example, an Add-Drop microring resonant cavity structure, a photonic crystal structure, or the like. This is not limited in this application.

The foregoing manner of patterning the optical structure #4 on the optical thin film #4 includes but is not limited to manners such as electron beam lithography, ion implantation, a dry etching technology, and metal evaporation.

S822: Remove the space layer #2 in an area #1, where a projection of the area #1 in a normal direction of a plane of the optical substrate does not overlap with a projection of an area #2 in the normal direction of the plane of the optical substrate, and the area #2 is an area in which the optical structure #4 is located.

The area #1 is shown in (b) in FIG. 7. The space layer #2 in the area #1 is removed, so that the optical thin film #3 in the area #1 may be exposed.

S823: Pattern the optical thin film #3 in the area #1 to form an optical structure #3.

The optical structure #3 includes an intra-layer transmission structure #3 configured to control transmission of an optical signal in the module, and an inter-layer coupling structure #3 configured to perform signal exchange with another module.

For example, the optical structure #3 may be a lithium niobate straight waveguide structure 1320, where a projection, in the normal direction of the plane of the optical substrate, of one end of the straight waveguide structure 1320 partially or completely overlaps with a projection, in the normal direction of the plane of the optical substrate, of a tapered waveguide part in the optical structure #4, to implement efficient coupling of an optical signal between the two modules based on the evanescent wave coupling effect. Therefore, the inter-layer coupling structures in the optical structure #3 and the optical structure #4 do not need to be optically aligned in a mechanical manner.

Alternatively, the optical structure #3 may be a lithium niobate photonic crystal cantilever beam structure, an F-P resonant cavity structure, or the like.

Optionally, chromium electrodes 1319 may be further prepared on two sides of the lithium niobate waveguide through electron beam evaporation or the like. The chromium electrodes 1319 are configured to polarize the lithium niobate waveguide, and after the polarization is completed, the chromium electrodes 1319 may be removed through wet etching or the like.

The foregoing manner of patterning the optical thin film includes but is not limited to manners based on physical bombardment or chemical etching, such as ultraviolet lithography, electron beam lithography, dry etching, wet etching, and ion beam etching.

According to the preparation method for the optical chip provided in this embodiment of this application, a three-dimensional optical chip having an entangled photon pair generated and modulated may be constructed. The chip may be used in fields such as optical quantum computing. In the method, a plurality of unpatterned heterogeneous optical materials are first arranged on a same optical substrate in a stacked manner, and after stacking of material thin films is completed, a corresponding optical structure is sequentially patterned at each layer in a top-down order, to implement construction of a heterogeneously integrated optical chip. According to the method, optical alignment between modules does not need to be performed in a mechanical manner, and preparation efficiency of the optical chip is improved. In addition, in terms of controlling a thickness of a space layer, there is no need to arrange a space layer on an existing structure in this method. Therefore, the thickness of the space layer can be accurately controlled.

FIG. 11 is a diagram of an example of an optical module according to this application. As shown in FIG. 11, the optical module 1100 includes a substrate 1110 and an optical chip 1120.

The substrate 1110 may include but is not limited to a ceramic substrate or a printed circuit board (Printed Circuit Board, PCB).

The optical chip 1120 is specifically the optical chip in any one of the implementations in FIG. 1 to FIG. 10.

An embodiment of this application further provides an apparatus. As shown in FIG. 12, the communication device 1200 includes a processor 1210 and a transceiver 1220. The processor 1210 is configured to process to-be-sent data to generate a digital signal. The transceiver 1220 includes an optical module shown in FIG. 12. The transceiver 1220 is configured to: process the signal, for example, process a generated radio frequency signal by using an optical chip to generate an optical signal, and send the optical signal to another communication device.

Alternatively, the optical chip processes an optical signal received by the transceiver to generate a radio frequency signal, the radio frequency signal may be processed by an electronic chip to generate a digital signal, and the data signal is processed by the processor to obtain data carried in the digital signal.

A person skilled in the art may use different methods to implement the described functions for each particular application. However, it should not be considered that the implementation goes beyond the scope of this application.

In the several embodiments provided in this application, it should be understood that the disclosed system and apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical chip, comprising an optical substrate, a first functional layer disposed on the optical substrate, a first space layer disposed on the first functional layer, and a second functional layer disposed on the first space layer, wherein
a second optical structure is formed at the second functional layer, the second optical structure comprises a second inter-layer coupling structure and a second intra-layer transmission structure, and the second intra-layer transmission structure is located in a first area of the second functional layer;
a first optical structure is formed at the first functional layer, the first optical structure comprises a first inter-layer coupling structure and a first intra-layer transmission structure, the first optical structure is located in a second area of the first functional layer, and a projection of the second area in a normal direction of a plane of the optical substrate does not overlap with a projection of the first area in the normal direction of the plane of the optical substrate; and
the inter-layer coupling structure is configured for signal exchange between the first functional layer and the second functional layer, the intra-layer transmission structure is configured to control signal transmission within the functional layer, the second inter-layer coupling structure is located in a third area of the second functional layer, the first inter-layer coupling structure is located in a fourth area of the first functional layer, and a projection of the third area in the normal direction of the plane of the optical substrate partially or completely overlaps with a projection of the fourth area in the normal direction of the plane of the optical substrate.

2. The optical chip according to claim 1, wherein the second optical structure further comprises the second inter-layer coupling structure located in a ninth area of the second functional layer, and the optical chip further comprises a second space layer disposed on the second functional layer, and a third functional layer disposed on the second space layer, wherein a third optical structure is formed at the third functional layer, and the third optical structure comprises a third inter-layer coupling structure and a third intra-layer transmission structure; and
the third inter-layer coupling structure is located in a seventh area of the third functional layer, the third intra-layer transmission structure is located in an eighth area of the third functional layer, a projection of the eighth area in the normal direction of the plane of the optical substrate does not overlap with the projection of the first area in the normal direction of the plane of the optical substrate, and a projection of the ninth area in the normal direction of the plane of the optical substrate partially or completely overlaps with a projection of the seventh area in the normal direction of the plane of the optical substrate.

3. The optical chip according to claim 1 or 2, wherein
the second intra-layer transmission structure comprises a first input waveguide, a first output waveguide, and at least one first optical resonant cavity, wherein
the first output waveguide comprises at least one waveguide structure, the at least one waveguide structure is in a one-to-one correspondence with the at least one first optical resonant cavity and is optically coupled to the at least one first optical resonant cavity, the first input waveguide comprises one waveguide structure, and the waveguide structure is optically coupled to the at least one first optical resonant cavity.

4. The optical chip according to claim 3, wherein the second inter-layer coupling structure comprises a first tapered structure formed at a first end of the first input waveguide.

5. The optical chip according to claim 4, wherein the first optical structure comprises a second optical resonant cavity, and a first waveguide and a second waveguide that are parallel to each other, and one end of the first waveguide is optically coupled to the first tapered structure.

6. The optical chip according to any one of claims 1 to 5, wherein a thickness of the second functional layer ranges from 150 nm to 5 µm.

7. The optical chip according to any one of claims 1 to 6, wherein a thickness of the first functional layer ranges from 150 nm to 5 µm.

8. The optical chip according to claim 1 or 2, wherein
the second intra-layer transmission structure is a Mach-Zehnder interferometer structure, and the Mach-Zehnder interferometer structure comprises a first interference arm, a second interference arm, and a second input waveguide; and
the second inter-layer coupling structure comprises a second tapered structure formed at a first end of the second input waveguide.

9. The optical chip according to claim 8, wherein the first optical structure comprises a straight waveguide structure, and one end of the straight waveguide structure is optically coupled to the second tapered structure.

10. The optical chip according to claim 8 or 9, wherein a thickness of the second functional layer ranges from 300 nm to 1 µm.

11. The optical chip according to claim 8 or 9, wherein a thickness of the first functional layer ranges from 200 nm to 500 nm.

12. A preparation method for an optical chip, comprising:
sequentially depositing a first functional layer, a first space layer, and a second functional layer on an optical substrate;
patterning the second functional layer to form a second optical structure, wherein the second optical structure is located in a first area of the second functional layer, and the second optical structure comprises a second inter-layer coupling structure and a second intra-layer transmission structure;
removing the first space layer in a second area to expose the first functional layer, wherein a projection of the second area in a normal direction of a plane of the optical substrate does not overlap with a projection of the first area in the normal direction of the plane of the optical substrate; and
patterning the first functional layer in the second area to form a first optical structure, wherein the first optical structure comprises a first inter-layer coupling structure and a first intra-layer transmission structure; and
the inter-layer coupling structure is configured for signal exchange between the first functional layer and the second functional layer, the intra-layer transmission structure is configured to control signal transmission within the functional layer, the second inter-layer coupling structure is located in a third area of the second functional layer, the first inter-layer coupling structure is located in a fourth area of the first functional layer, and a projection of the third area in the normal direction of the plane of the optical substrate partially or completely overlaps with a projection of the fourth area in the normal direction of the plane of the optical substrate.

13. The method according to claim 12, wherein before the patterning the second functional layer to form a second optical structure, the method further comprises:
sequentially depositing a second space layer and a third functional layer on the first structure;
patterning the third functional layer to form a third optical structure, wherein the third optical structure is located in a fifth area of the third functional layer, and the third optical structure comprises a third inter-layer coupling structure and a third intra-layer transmission structure; and
removing the second space layer in a sixth area to expose the second functional layer, wherein a projection of the sixth area in the normal direction of the plane of the optical substrate does not overlap with a projection of the fifth area in the normal direction of the plane of the optical substrate.

14. The method according to claim 13, wherein the third inter-layer coupling structure is located in a seventh area of the third functional layer, the third intra-layer transmission structure is located in an eighth area of the third functional layer, and the patterning the second functional layer to form a second optical structure comprises:
patterning the second functional layer in the sixth area to form the second optical structure, wherein the second optical structure further comprises the second inter-layer coupling structure located in a ninth area of the second functional layer; and
a projection of the eighth area in the normal direction of the plane of the optical substrate does not overlap with the projection of the sixth area in the normal direction of plane of the optical substrate, and a projection of the ninth area in the normal direction of the plane of the optical substrate partially or completely overlaps with a projection of the seventh area in the normal direction of the plane of the optical substrate.

15. The method according to any one of claims 12 to 14, wherein the patterning the second functional layer to form a second optical structure comprises:
patterning the second functional layer to form the second intra-layer transmission structure, wherein the second intra-layer transmission structure comprises a first input waveguide, a first output waveguide, and at least one first optical resonant cavity, wherein
the first output waveguide comprises at least one waveguide structure, the at least one waveguide structure is in a one-to-one correspondence with the at least one first optical resonant cavity and is optically coupled to the at least one first optical resonant cavity, the first input waveguide comprises one waveguide structure, and the waveguide structure is optically coupled to the at least one first optical resonant cavity.

16. The method according to claim 15, wherein the patterning the second functional layer to form a second optical structure further comprises:
patterning a first end of the first input waveguide into a first tapered structure to form the second inter-layer coupling structure.

17. The method according to claim 16, wherein the patterning the first functional layer in the second area to form a first optical structure comprises:
patterning the first functional layer in the second area to form a second optical resonant cavity, and a first waveguide and a second waveguide that are parallel to each other, wherein one end of the first waveguide is optically coupled to the first tapered structure.

18. The method according to any one of claims 12 to 17, wherein a thickness of the second functional layer ranges from 150 nm to 5 µm.

19. The method according to any one of claims 12 to 18, wherein a thickness of the first functional layer ranges from 150 nm to 5 µm.

20. The method according to any one of claims 12 to 14, wherein the patterning the second functional layer to form a second optical structure comprises:
patterning the second functional layer to form a Mach-Zehnder interferometer structure, wherein the Mach-Zehnder interferometer structure comprises a first interference arm, a second interference arm, and a second input waveguide; and
patterning a second tapered structure formed at a first end of the second input waveguide.

21. The method according to claim 20, wherein the patterning the first functional layer in the second area to form a first optical structure comprises:
patterning the first functional layer in the second area to form a straight waveguide structure, wherein one end of the straight waveguide structure is optically coupled to the second tapered structure.

22. The method according to claim 20 or 21, wherein a thickness of the second functional layer ranges from 300 nm to 1 µm.

23. The method according to claim 20 or 21, wherein a thickness of the first functional layer ranges from 200 nm to 500 nm.
